# FASCICULE DE BREVET EUROPEEN

(11) **EP 0 683 556 B1**
(45) Date de publication et mention de la délivrance du brevet: **17.09.1997**
(21) Numéro de dépôt: 95401113.6
(22) Date de dépôt: 12.05.1995
(51) Int. Cl.: H02G 15/068, H01R 13/53

(54) **Pièce de liaison électrique d'un manchon protecteur avec une extrémité d'un écran semi-conducteur d'un câble électrique**
Teil einer elektrischen Verbindung einer Schutzhülse mit einem Ende einer halbleitenden Abschirmung eines elektrischen Kabels
Piece of electrical connection of a protective sleeve to an end of a semiconductive screen of an electrical cable

(30) Priorité: 19.05.1994 FR 9406115
(43) Date de publication de la demande: 22.11.1995
(73) Titulaire: SAT (Société Anonyme de Télécommunications), 75116 Paris (FR)
(72) Inventeur: Arette-Hourquet, Damien, F-77130 Cannes-Ecluse (FR)
(74) Mandataire: Fruchard, Guy

(56) Documents cités:
- EP-A- 0 115 322
- EP-A- 0 139 483
- FR-A- 1 564 289
- FR-A- 2 456 410
- GB-A- 2 164 805

## Description

La présente invention concerne une pièce de liaison électrique d'un manchon protecteur avec une extrémité d'un écran semi-conducteur d'un câble électrique.

On sait que les câbles électriques moyenne ou haute tension comportent généralement une âme conductrice recouverte d'une couche isolante elle-même recouverte d'un écran semi-conducteur en contact avec un blindage métallique relié à la terre et recouvert d'une gaine externe.

On sait également que lors du raccordement d'un câble électrique à un autre câble électrique ou à un équipement, ou lors de la mise en attente d'une extrémité d'un câble électrique, il est nécessaire de dénuder l'âme conductrice du câble et également de sectionner l'écran semi-conducteur en retrait de l'extrémité de la couche isolante afin d'éviter la formation d'un arc électrique entre l'âme conductrice qui est portée à un potentiel élevé et l'écran semi-conducteur qui est au potentiel de la terre.

Afin d'éviter l'apparition de contraintes électriques à l'extrémité de l'écran semi-conducteur, il est ensuite nécessaire de disposer sur la jonction ou sur l'extrémité de câble un manchon protecteur comportant une couche conductrice, semi-conductrice ou en matériau réducteur de contraintes destinée à venir en contact avec l'extrémité de l'écran semi-conducteur.

L'extrémité de l'écran semi-conducteur réalise une marche par rapport à la couche isolante du câble et la solution la plus simple pour mettre la couche conductrice ou semi-conductrice du manchon protecteur en liaison avec l'extrémité de l'écran consisterait à mettre l'extrémité du manchon en appui sur l'extrémité de l'écran. Toutefois, qu'il s'agisse d'une jonction de câble ou d'une extrémité de câble, le manchon protecteur est généralement associé à d'autres éléments qui sont positionnés par rapport à l'extrémité de l'âme conductrice ou l'extrémité de la couche isolante du câble de sorte que la mise en bout du manchon protecteur par rapport à l'écran semi conducteur ne pourrait être obtenue qu'à condition de découper l'écran semi-conducteur à une distance très précise par rapport à l'extrémité de l'âme conductrice ou de la couche isolante. C'est le cas en particulier du dispositif de protection décrit dans le document EP 115 322 qui décrit une pièce de liaison en une seule pièce avec un manchon répartiteur de tension de sorte que la pièce de liaison prend simultanément appui sur les extrémités de deux couches successives du câble, ce qui implique une réalisation très précise de la cote séparant ces deux extrémités.

En outre, dans le cas d'une jonction de câbles, le manchon protecteur doit être en contact avec l'écran semi-conducteur de chacun des deux câbles et il serait donc nécessaire de découper les écrans semi-conducteurs des câbles pour que la distance entre les extrémités des écrans semi-conducteurs soit exactement égale à la longueur du manchon protecteur mis en place. Une telle précision dans le découpage de l'écran semi-conducteur ne peut pas être envisagée pour des câbles qui sont préparés sur un chantier.

Afin d'assurer une liaison entre le manchon protecteur et l'extrémité de l'écran semi-conducteur, on prévoit donc généralement un recouvrement de l'extrémité de l'écran semi-conducteur par le manchon protecteur sur une distance qui est plusieurs fois l'épaisseur de l'écran semi-conducteur.

Cependant, ainsi qu'il a été rappelé ci-dessus, l'extrémité de l'écran semi-conducteur forme une marche par rapport à la couche isolante et le recouvrement de cette marche par un manchon protecteur qui est généralement semi-rigide, qu'il s'agisse d'un manchon protecteur moulé en atelier ou d'un manchon protecteur thermorétractable, ne peut être réalisé sans éviter la formation d'une cavité annulaire immédiatement adjacente à l'extrémité de l'écran semi-conducteur. Si cette cavité est laissée vide, elle est à l'origine de contraintes électriques très importantes qui finissent par provoquer une détérioration de la couche isolante du câble.

Pour éviter un tel défaut, on prévoit généralement de disposer à l'extrémité de l'écran semi-conducteur un matériau de remplissage tel qu'un mastic semi-conducteur. Cependant lorsque le manchon protecteur est mis en place, soit par emmanchement à force d'un manchon moulé soit par rétraction d'un manchon thermorétactable, il est nécessaire de procéder de façon très soigneuse à cette mise en place sinon une bulle d'air risque d'être emprisonnée à l'extrémité de l'écran semi-conducteur et de provoquer un défaut électrique conduisant rapidement à la détérioration de la couche isolante du câble (voir GB-A-2 164 805).

Un but de l'invention est de proposer une structure de liaison électrique pouvant être mise en place de façon aisée quelle que soit la distance de retrait de l'écran semi-conducteur par rapport à l'extrémité de la couche isolante ou de l'âme conductrice du câble.

En vue de la réalisation de ce but, on propose selon l'invention une pièce de liaison électrique entre un manchon protecteur et une extrémité d'un écran semi-conducteur s'étendant sur une couche isolante cylindrique d'un câble électrique, cette pièce ayant une surface interne comprenant une première portion ayant un diamètre sensiblement égal à un diamètre externe de la couche isolante du câble et reliée par un épaulement à une seconde portion ayant un diamètre sensiblement égal à un diamètre externe de l'écran semi-conducteur, et une surface externe comportant une partie conique à une extrémité recouvrant la couche isolante du câble, la pièce de liaison étant séparée du manchon protecteur de façon à être enfilée sur le câble avant mise en place du manchon protecteur.

Ainsi, lors de la mise en place de la pièce tubulaire, l'épaulement de la surface interne de la pièce tubulaire vient en appui sur l'extrémité de l'écran semi-conducteur et assure une liaison électrique intime avec celui-ci, et lors de la mise en place du manchon protecteur, celui-ci entre en contact avec la partie conique de la surface externe de la pièce tubulaire avec laquelle il assure également un contact intime de sorte qu'une liaison électrique de haute qualité est obtenue entre l'extrémité de l'écran semi-conducteur et la couche conductrice, semi-conductrice ou en matériau répartiteur linéaire de tension du manchon protecteur.

Selon une version avantageuse de l'invention, l'épaulement est perpendiculaire à la surface interne de la pièce tubulaire. Ainsi, une préparation satisfaisante du câble électrique est obtenue en effectuant simplement une coupe droite de l'écran semi-conducteur, ce qui peut être aisément réalisé même sur un chantier.

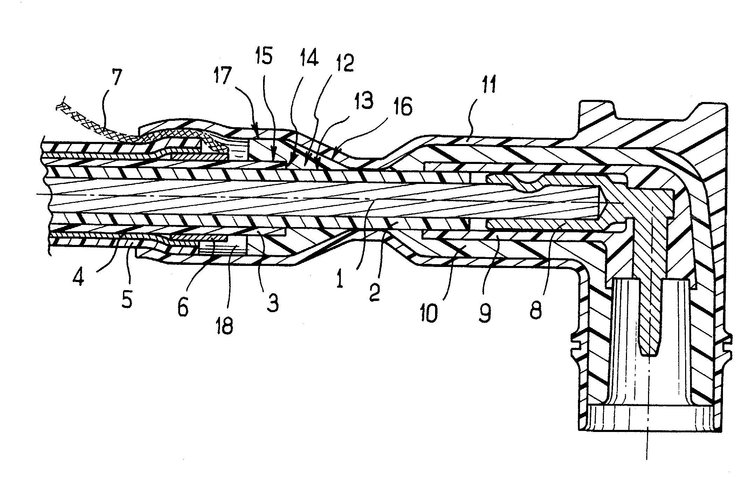

D'autres caractéristiques et avantages de l'invention apparaîtront à la lecture de la description qui suit d'un mode de réalisation particulier non limitatif de l'invention en relation avec la figure unique ci-jointe qui est une vue en coupe axiale d'un câble équipé d'un dispositif de liaison selon l'invention, en relation avec une prise embrochable.

En référence à la figure, le câble électrique comporte d'une façon connue en soi, une âme conductrice 1 recouverte d'une couche isolante 2 qui a été sectionnée en retrait de l'extrémité de l'âme conductrice 1 pour dégager cette extrémité, un écran semi-conducteur 3 qui recouvre la couche isolante 2 et a été sectionné en retrait de l'extrémité de la couche isolante 2, un blindage métallique 4 et une gaine externe 5 qui ont été sectionnés en retrait de l'extrémité de l'écran semi-conducteur 3. La mise à la terre de l'écran semi-conducteur 3 et du blindage métallique 4 est assurée par une bague métallique 6 qui est glissée sous l'extrémité du blindage métallique 4 et est reliée à une tresse métallique 7 convenablement reliée au potentiel de la terre de façon non représentée.

De son côté la prise embrochable qui est réalisée de façon préfabriquée moulée monobloc comporte un organe de raccordement conducteur 8 qui est serti sur l'extrémité de l'âme conductrice du câble, une couche interne conductrice 9 qui entoure l'organe de raccordement et recouvre l'extrémité de la gaine isolante 2 du câble avec laquelle elle est en contact, une couche isolante 10 qui recouvre la gaine interne conductrice 9, et un manchon protecteur 11 qui dans le mode de réalisation illustré, est formé d'une seule couche en caoutchouc conducteur, c'est-à-dire déformable de façon élastique, qui recouvre la couche isolante 10 et s'étend au-delà de celle-ci jusqu'à la gaine externe 5 du câble dont elle recouvre l'extrémité.

Dans le mode de réalisation illustré le manchon protecteur 11 a au repos un diamètre interne inférieur au diamètre externe du câble.

Afin d'assurer un contact électrique entre le manchon conducteur 11 et l'extrémité de l'écran semi-conducteur 3, on prévoit selon l'invention une structure de liaison comportant une pièce tubulaire généralement désignée en 12 ayant une surface interne comprenant une portion 13 ayant un diamètre sensiblement égal au diamètre externe de la couche isolante 2 du câble et reliée par un épaulement 14 à une seconde portion 15 ayant un diamètre sensiblement égal au diamètre externe de l'écran semi-conducteur 3. Par ailleurs, la pièce tubulaire 12 a une surface externe comportant une partie conique 16 à l'extrémité recouvrant la couche isolante du câble, et une partie cylindrique adjacente 17 en regard de l'extrémité de l'écran semi-conducteur 3.

Dans le mode de réalisation illustré l'épaulement 14 est perpendiculaire à la surface interne de la pièce tubulaire 12.

La pièce tubulaire 12 est en une matière appropriée pour réaliser une liaison électrique entre le manchon protecteur 11 et l'extrémité de l'écran semi-conducteur 3, par exemple en élastomère chargé pour le rendre conducteur, semi-conducteur ou lui donner des propriétés de répartiteur linéaire de tension.

Lors de la mise en place de la prise embrochable, la pièce tubulaire 12 est enfilée sur le câble préalablement préparé comme il a été décrit ci-dessus jusqu'à ce que l'épaulement 14 vienne en contact avec l'extrémité de l'écran semi-conducteur 3. Il suffit pour cela que la longueur d'écran semi-conducteur 3 dégagée lors de la préparation du câble soit supérieure à la longueur de la portion 15 de la pièce de liaison 12 sans pour autant que cette cote soit nécessairement très précise. Un ouvrier travaillant sur le chantier peut s'assurer que cette cote est satisfaisante en vérifiant que l'extrémité de la portion 15 n'est pas en butée sur la bague 6 ou sur l'extrémité des couches adjacentes 4, 5 du câble. Dans cette position, la portion 15 de la surface interne de la pièce tubulaire 12 est en contact intime avec la surface externe de l'extrémité de l'écran semi-conducteur 3 et la portion 13 de la surface interne de la pièce tubulaire 12 est en contact intime avec la couche isolante 2 du câble. Si pour des raisons de tolérance de fabrication le diamètre des portions 13 et 15 n'est pas exactement égal à celui des surfaces qu'elles recouvrent on peut également prévoir de mettre en place une fine couche de graisse ou de mastic conducteur ou semi-conducteur afin d'assurer un contact intime sans risquer de former une bulle d'air. La prise embrochable est ensuite enfilée sur l'extrémité du câble jusqu'à ce que l'âme conductrice 1 du câble soit en butée dans le fond de la cavité de l'organe de raccordement 8. Lors du mouvement d'introduction de la prise embrochable sur le câble, le manchon protecteur 11 coulisse sur la surface externe de la pièce tubulaire 12 en se déformant élastiquement et assure un contact intime avec celle-ci sans risque de formation d'un défaut électrique au niveau de l'extrémité de l'écran semi-conducteur 3 du câble.

On remarquera à ce propos que dans le mode de réalisation illustré le manchon protecteur 11 délimite avec l'écran semi-conducteur 3, la pièce tubulaire 12 et l'extrémité de la gaine externe 5 et du blindage métallique 4 du câble, une cavité annulaire 18 qui contient de l'air. La présence de cette cavité remplie d'air n'est toutefois pas constitutive d'un défaut électrique et n'est pas génératrice de contraintes électriques en raison de sa disposition en retrait par rapport à l'extrémité de l'écran semi-conducteur du câble. Afin d'éviter toute infiltration d'eau, la cavité 18 est de préférence remplie avec un mastic d'étanchéité préalablement à la mise en place de l'extrémité embrochable.

On peut apporter des variantes de réalisation sans sortir du cadre tel que défini par les revendications.

En particulier, on peut réaliser la pièce tubulaire selon l'invention avec un épaulement 14 de forme conique qui est mis en contact intime avec l'extrémité de l'écran semi-conducteur 3 du câble soit par pincement de l'extrémité de cet écran soit en réalisant un chanfrein conique à l'extrémité de l'écran semi-conducteur 3 lors de la préparation du câble.

Bien que dans le mode de réalisation illustré le manchon protecteur 11 recouvre totalement la pièce tubulaire 12 et s'étende même au-delà de celle-ci sur la gaine externe du câble, on peut prévoir un manchon protecteur qui recouvre seulement partiellement la pièce tubulaire 12, de préférence au moins jusqu'à l'aplomb de l'extrémité de l'écran semi-conducteur 3. Lorsque la pièce tubulaire 12 est de petite dimension elle peut avoir une surface externe totalement conique.

Bien que l'invention ait été décrite en relation avec une extrémité embrochable, elle s'applique également à une jonction de deux câbles, chaque extrémité de câble recevant alors une pièce tubulaire 12 qui vient en contact avec l'extrémité de l'écran semi-conducteur correspondant, le manchon protecteur assurant une liaison entre les deux pièces tubulaires 12. A ce propos, on remarquera que le manchon protecteur 11 peut être un manchon moulé ou un manchon thermorétractable et peut comporter une multiplicité de couches, la couche la plus interne qui vient en contact avec les pièces tubulaires 12 étant alors une couche conductrice, semi-conductrice ou en matériau répartiteur linéaire de tension selon l'application envisagée.

## Revendications

1. Pièce de liaison électrique entre un manchon protecteur (11) et une extrémité d'un écran semi-conducteur (3) s'étendant sur une couche isolante cylindrique (2) d'un câble électrique, cette pièce (12) ayant une surface interne comprenant une première portion (13) ayant un diamètre sensiblement égal à un diamètre externe de la couche isolante du câble et reliée par un épaulement (14) à une seconde portion (15) ayant un diamètre sensiblement égal à un diamètre externe de l'écran semi-conducteur (3), et une surface externe comportant une partie conique (16) à une extrémité recouvrant la couche isolante (2) du câble, caractérisée en ce que la pièce de liaison est séparée du manchon protecteur de façon a être enfilée sur le câble avant mise en place du manchon protecteur.

2. Pièce de liaison selon la revendication 1, caractérisée en ce que l'épaulement (14) est perpendiculaire à la surface interne de la pièce tubulaire (12).

3. Pièce de liaison selon la revendication 1 ou la revendication 2, caractérisée en ce que la surface externe de la pièce tubulaire (12) comporte une partie cylindrique (17) au-delà de la partie conique (16).

## Patentansprüche

1. Verbindungsteil zum elektrischen Verbinden einer Schutzhülse (11) mit einem Ende einer Halbleiterabschirmung (3), die sich auf einer zylindrischen Isolierschicht (2) eines Elektrokabels erstreckt, wobei das Verbindungsteil (12) eine Innenfläche mit einem ersten Abschnitt (13) hat, dessen Durchmesser im wesentlichen gleich einem Außendurchmesser der Isolierschicht des Kabels ist und der über eine Schulter (14) mit einem zweiten Abschnitt (15) verbunden ist, dessen Durchmesser im wesentlichen gleich einem Außendurchmesser der Halbleiterabschirmung (3) ist, und wobei das Verbindungsteil (12) eine Außenfläche hat, die an einem die Isolierschicht (2) des Kabels umschließenden Ende einen konischen Bereich (16) hat, dadurch **gekennzeichnet,** daß das Verbindungsteil von der Schutzhülse getrennt ist, so daß es vor dem Anbringen der Schutzhülse auf das Kabel auffädelbar ist.

2. Verbindungsteil nach Anspruch 1, dadurch **gekennzeichnet**, daß die Schulter (14) zur Innenfläche des rohrförmigen Teiles (12) senkrecht ist.

3. Verbindungsteil nach Anspruch 1 oder Anspruch 2, dadurch **gekennzeichnet**, daß die Außenfläche des rohrförmigen Teiles (12) neben dem konischen Bereich (16) einen zylindrischen Bereich (17) hat.

## Claims

1. Joining part for electrically connecting a protecting sleeve (11) to an end portion of a semiconductive screen (3) extending on a cylindrical isolating layer (2) of an electric cable, said part (12) having an internal surface comprising a first portion (13) having a diameter substantially equal to an external diameter of the cable isolating layer and joined up by a shoulder (14) to a second portion (15) having a diameter substantially equal to an external diameter of the semiconductive screen (3), and an external surface comprising a conical portion (16) at an end portion covering the cable isolating layer (2), characterized in that the part is separate from the protecting sleeve so as to be fitted on the cable before the setting up of the protecting sleeve.

2. Joining part according to claim 1, characterized in that the shoulder (14) is perpendicular to the internal surface of the tubular part (12).

3. Joining part according to claim 1, characterized in that the external surface of the tubular part (12) comprises a cylindrical portion (17) beyond the conical portion (16).
